# EUROPEAN PATENT SPECIFICATION

(11) **EP 3 401 462 B1**
(45) Date of publication and mention of the grant of the patent: **10.08.2022**
(21) Application number: 18020184.0
(22) Date of filing: 30.04.2018
(51) Int. Cl.: E04F 10/06, E04H 15/08

(54) **AWNING APPARATUS AND METHODS OF RETRACTING AND EXTENDING SAID AWNING**
MARKISENVORRICHTUNG UND VERFAHREN ZUM VERSTAUEN UND AUSFAHREN DER VORRICHTUNG
APPAREIL D'AUVENT ET METHODES POUR RÉTRACTER ET ERIGER LEDIT AUVENT

(30) Priority: 08.05.2017 US 201762503077 P
(43) Date of publication of application: 14.11.2018
(73) Proprietor: Activa Leisure Inc., Ningbo, Zhejiang 315104 (CN)
(72) Inventor: Ma, Oliver Joen-an, Arcadia, CA 91007 (US)
(74) Representative: Schafhaus, Stefan

(56) References cited:
- EP-A1- 0 001 592
- EP-A2- 0 810 336
- EP-A2- 1 092 820
- EP-A2- 1 895 070
- DE-U1-202013 103 994

## Description

### BACKGROUND

### Field of the Invention

This application is directed to awnings, which block the sun to provide shade in a shadowed area thereof and methods of extending or retracting such awnings.

### Description of the Related Art

Awnings provide shade in a shadow cast by a fabric or similar structure that is supported by a frame. The frame can be connected to a building exterior surface or in some applications to a vehicle or other support surface. Generally the frame extends out from the wall or other support surface unrolling or unfolding the fabric such that the fabric is extended and in some cases stretched. This arrangement provides a large surface area that obstructs the sun which is shining above the awning. Awnings are very useful on a sunny, hot day.

Awnings perform best when the sun is directly overhead or at least high in the sky. On hot days, it is desirable to have shade from the sun at other times of the day. It may be so hot and bright that having shade early in the morning or later in the afternoon or evening is desirable. Positioning the fabric at a non-horizontal angle for the fabric as it extends from the support surface can improve early and late day performance. However, providing a non-horizontal angle arrangement either requires a much higher mount point or results in reduced clearance beneath the fabric or the frame supporting such that one could bump one's head on the fabric or the frame.

Some awnings have been proposed that have two fabrics. A first fabric is generally horizontally placed when the awning is extended and a second fabric hangs downward, i.e., is vertical in orientation. E.g., the EP 0 001 592 A1 shows such an awning, where the second fabric hangs vertically downwards from the outer end of a single extendable bar assembly. Although the length of this second fabric may be variable, its second end is not connected to the assembly and may swing freely in the wind and thus may not provide a defined shade zone. The EP 1 092 820 A2 works similar; the extension of the second fabric is realized by an electric motor located within the extendable bar assembly. The DE 20 2013 103994 U1 discloses an awning with a lower canopy having a first end coupled with a second roller of an extendable bar assembly and a second end extendable from the extendable bar assembly, whereas the lower canopy is retractable about the second roller and extendable from the extendable bar assembly. These proposed awnings have a good ability to block the sun when the sun is low in the sky (morning, late afternoon, and evening) but generally had overly complex mechanisms, operations or components, e.g. the awning known from the DE 20 2013 103994 U1 may need three crank drives which have to be operated separately by the user. The EP 0 180 336 A2 does not disclose an awning which is capable of providing sufficient shade early in the morning or later in the afternoon. EP1895070 A2 discloses a further awning with an upper and a lower canopy.

### SUMMARY

An awning is needed that can provide shade from the sun when the sun is high in the sky as well as when the sun is low in the sky. An awning is needed that can block low angle sun rays without compromising clearance of a horizontal awning frame. An awning is needed with multiple fabrics that can operate without multiple crank points and without complex motors that add expense and also are subject to wear, breakage and needing frequent battery replacement. The present invention provides an awning assembly according to claim 1, a method of extending an awning assembly according to claim 9 and a method of retracting an awning assembly according to claim 13 which overcome the above-noted problems of the related prior art.

In one embodiment, an awning assembly is provided that has an awning frame assembly, an upper canopy, and a lower canopy. The awning frame assembly has a mount portion, an extendable bar assembly, and an extendable arm. The extendable arm has a first end coupled with the mount portion and a second end coupled with the extendable bar assembly. The upper canopy has a first end coupled with the mount portion and a second end coupled with the extendable bar assembly. The upper canopy is retractable to a compact configuration adjacent to the mount portion and extendable to an extended position upon extension of the extendable arm to provide shade from above. The lower canopy has a first end coupled with the extendable bar assembly and a second end extendable from the extendable bar assembly. The lower canopy is retractable to a compact configuration within the extendable bar assembly and extendable from the extendable bar assembly to provide shade from a side position. The extendable bar assembly has a first roller coupled with the second end of the upper canopy, a second roller coupled with the lower canopy, and a motion generator. The motion generator is coupled with the second roller. The motion generator stores energy as the second roller is moved to retract the lower canopy. The motion generator is configured to use the stored energy to move the second roller to extend the lower canopy from the extendable bar assembly.

Another aspect of the above embodiment is that the motion generator has a transmission with a first gear coupled to a first axle, the first axle coupled to the first roller, a second gear coupled to a second axle, the second axle coupled to the second roller; and a third gear coupled to a third axle, the third axle journaled in the extendable bar assembly. The third gear has a first portion coupled with the first gear and a second portion coupled with the second gear. The third gear transfers rotation of the first axle into rotation of the second axle and further converts rotation of the second axle into rotation of the first axle.

Another aspect of the above embodiment is that rotation of the first axle in a first direction causes the second end of the upper canopy to be wound around the first roller and simultaneously causes rotation of the second axle in a second direction opposite the first direction. This causes the lower canopy to be un-wound from the second roller.

Another aspect of the above embodiment is that the upper canopy has a shade length and a slack length, the shade length spanning an extension distance comprising the perpendicular distance from a portion of the mount portion facing the extendable bar assembly to a portion of the extendable bar assembly facing the mount portion when the extendable bar assembly is fully extended away from the mount portion. The slack length furls on the first roller with the upper canopy in the extended position.

Another aspect of the above embodiment is that a spring releases stored strain energy to simultaneously extend the lower canopy and to tension the upper canopy.

Another aspect of the above embodiment is that the motion generator comprises a transmission driven by a spring disposed in a housing. The housing is disposed at one end of the extendable bar assembly.

Another embodiment is an awning frame assembly that has a moveable housing and a support arm. The support arm has a first end configured to couple with a ground surface and a second end coupled with the moveable housing. An upper canopy has an end coupled with the extendable housing. The upper canopy is extendable upon movement of the moveable housing away from the ground surface. A lower canopy has an end coupled with the moveable housing. The lower canopy is extendable away from the moveable housing. A transmission is coupled with the upper canopy and with the lower canopy to tension the horizontal canopy and to deploy the lower canopy assembly.

Another aspect of the above embodiment is that the spring driven transmission is configured to simultaneously tension the upper canopy and deploy the lower canopy.

Another aspect of the above embodiment is that a length of the upper canopy is wound about a roller disposed in the moveable housing while the lower canopy is unwound from the roller and extended.

Another aspect of the above embodiment is that the awning assembly is retractable by first unwinding a length of the upper canopy from a first roller disposed in the moveable housing until the lower canopy is fully wound about a second roller disposed in the moveable housing.

Another aspect of the above embodiment is that a third roller configured to be disposed adjacent to the ground surface winds up the upper canopy until the lower canopy is fully wound about the second roller. The awning assembly configured such that further winding of the upper canopy about the third roller moves the moveable housing toward the ground surface.

Another embodiment is a method of extending an awning assembly. The method includes extending a support arm to extend away from a ground surface to move a housing away from the ground surface and to extend an upper canopy away from the ground surface. The method further includes extending a length of the upper canopy from the ground surface after the support arm is fully extended. The method further includes engaging a transmission disposed in the housing to move a first roller disposed in the housing to wind up a slack length of the upper canopy to tension the upper canopy and to move a second roller disposed in the housing to unfurl a length of a lower canopy from within the housing.

Another aspect of the above embodiment is that a ratio of the slack length to the length of the lower canopy being unfurled is defined substantially by a transmission coupling the first and second rollers.

Another aspect of the above embodiment is that the ratio is in the range of 1:1 to 1:10.

Another aspect of the above embodiment is that extending the support arm further comprises unwinding a base roller to extend the upper canopy and further extending the length comprises further unwinding the base surface roller.

Another embodiment is a method of retracting an awning assembly, comprising:
retracting an upper canopy to unwind a slack length of the upper canopy from a first roller disposed in a moveable housing of the awning assembly; at least partially simultaneously with retracting the slack length of the upper canopy, winding a vertical length of the lower canopy about a second roller disposed in the moveable housing of the awning assembly; and storing potential energy in a resilient member disposed on or in the moveable housing of the awning assembly while winding the lower canopy.

Another aspect of the above embodiment is wherein a ratio of the slack length to the vertical length is substantially defined by a ratio of rotation of the transmission.

Another aspect of the above embodiment is wherein the ratio of rotation is in the range of 1:1 to 1:10.

Another aspect of the above embodiment is wherein the upper canopy is retracted by winding the upper canopy about a base roller.

Another embodiment is an awning assembly with an awning frame assembly with a mount portion, an extendable bar assembly, and an extendable arm. The extendable arm has a first end coupled with the mount portion and a second end coupled with the extendable bar assembly. An upper canopy has a first end coupled with a base roller of the mount portion and a second end coupled with a first roller of the extendable bar assembly. The upper canopy is retractable about the base roller. A lower canopy has a first end coupled with a second roller of the extendable bar assembly and a second end extendable from the extendable bar assembly. The lower canopy is retractable on the second roller and extendable from the extendable bar assembly. The awning frame assembly has a stowed position in which the extendable bar assembly is adjacent the mount portion and an extended position in which the extendable bar assembly is extended on the extendable arm.

Another aspect of the above embodiment is that the first roller is rotationally coupled with the second roller by a transmission on the extendable bar assembly.

Another aspect of the above embodiment is that a rotation of the first roller furls a slack length of the upper canopy onto the first roller and a corresponding rotation of the second roller unfurls a corresponding length of the lower canopy from the second roller.

Another aspect of the above embodiment is that a rotation of the first roller unfurls a slack length of the upper canopy from the first roller and a corresponding rotation of the second roller furls a corresponding length of the lower canopy onto the second roller.

Another aspect of the above embodiment is that the second end of the upper canopy is configured to apply a first tensioning force on the first roller resulting in a first moment on the first roller as the extendable bar assembly is extended between the compact position and the extended position. A second tensioning force is applied by the upper canopy on the first roller resulting in a second moment on the first roller in the extended position. The first moment prevents rotation of the first roller and the second moment allows rotation of the first roller.

Another aspect of the above embodiment is that the transmission has a biasing element that stores energy as the second roller is rotated to retract the lower canopy. The stored energy of the biasing element biases the second roller to extend the lower canopy from the extendable bar assembly.

Another aspect of the above embodiment is that the biasing element is a spring.

### BRIEF DESCRIPTION OF THE DRAWINGS

These and other features, aspects and advantages are described below with reference to the drawings, which are intended to illustrate but not to limit the inventions. In the drawings, like reference characters denote corresponding features consistently throughout similar embodiments. The following is a brief description of each of the drawings.
Figure 1 is a perspective view of an awning assembly in a fully retracted configuration.
Figure 2 is a perspective view of an awning frame assembly that can be used in the awning assembly of Figure 1 with an extendable bar assembly in a partially extended configuration and with fabrics removed for a clearer view of the awning frame assembly.
Figure 3 is a perspective view of the awning assembly of Figure 1 in which an extendable bar assembly and an upper canopy are extended.
Figure 4 is a perspective view of the awning assembly of Figure 1 in which an extendable bar assembly, the upper canopy, and a lower canopy are extended.
Figure 5 is an exploded view of a portion of the awning frame assembly of Figure 2 showing a housing and a cover removed to expose internal components of an extendable bar assembly at detail 5-5 in Figure 4.
Figure 6 is an end perspective view of the extendable bar assembly including a slack roller and a vertical roller.
Figure 7 is a front view similar to Figure 6 showing a mount plate configured to support the extendable bar assembly.
Figure 8 is an exploded view of some of the components of Figure 7.
Figure 9 is a perspective end view of a roller of the extendable bar assembly.
Figure 10A is a schematic drawing of the awning assembly with the upper canopy partially extended.
Figure 10B is a schematic drawing of the awning assembly with the upper canopy fully extended.
Figure 10C is a schematic drawing of the awning assembly with the upper canopy fully extended and the lower canopy extended.
Figure 10D is a schematic drawing of the awning assembly with the upper canopy fully extended and the lower canopy fully extended.
Figure 11A is a perspective view of the awning assembly of Figure 11 with an extendable bar assembly in a partially extended configuration.
Figure 11B is a schematic view of one embodiment a mechanism that can be incorporated into the awning assembly of Figure 11A for extending the extendable bar thereof.
Figure 12 is a schematic view of an embodiment of a worm gear and worm wheel assembly for extending the extendable bar of the awning assembly of Figure 11B.
Figure 13A-13C show a schematic view of a braking mechanism.

### DETAILED DESCRIPTION OF THE PREFERRED EMBODIMENT

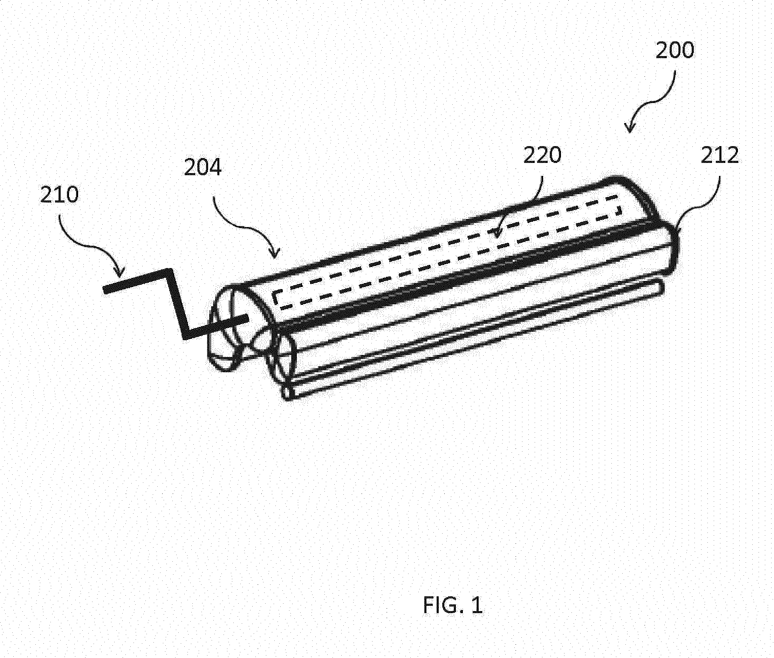

**Figure** 1 illustrates an embodiment of an awning assembly 200 comprising an awning frame assembly 204. The awning frame assembly 204 can further comprise an extendable bar assembly 212 and a mounting structure 208 to mount on a solid or rigid structure. The extendable bar assembly 212 can be extended away from the mounting structure 208. The extendable bar assembly 212 is one example of a moveable housing in that the extendable bar assembly 212 encloses a potential energy storage device that is adapted to drive extension of a lower canopy and/or to tension an upper canopy. Examples of uses for the awning assembly 200 include the side of a building, over a sidewalk or from the side of a recreational vehicle or other type of vehicle in which a shade structure might be desired. Another version might be for use in over the window of a house. Each of the side of the building, the side of the recreational vehicle and the location over the window of the house are examples of a ground surface as used herein.

In some embodiments, the structure 208 comprises a flat mounting plate with screw holes for mounting on a flat surface of the rigid structure (not shown). In other embodiments, the mounting structure comprises a bracket or rail system such that the awning frame assembly 204 can be removeably coupled with the rigid structure. The mounting structure 208 can further include a base roller 220 rotatably coupled with the mounting structure and an awning extender 210 coupled with the base roller 220 for controlling its rotation.

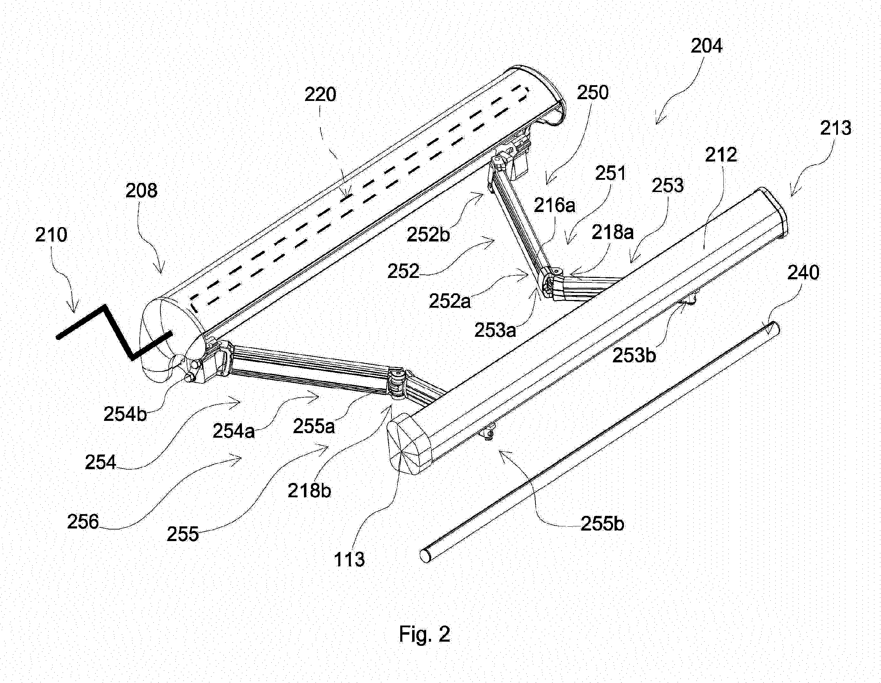

**Figure** 2 shows one implementation of the frame assembly 204 of the awning assembly 200. The extendable bar assembly 212 extended away in a horizontal direction from the mounting structure 208. In some embodiments, the extendable bar assembly 212 extends away from the mounting structure 208 an angle either upwards or downwards. The awning assembly 200 can comprise one or a plurality, e.g., a pair, of extendable arms 250. A first extendable arm 251 of the extended arms can comprise an outer segment 253 and an inner segment 252. The inner segment 252 can be pivotably connected at a first end 252a with a first end 253a of the outer segment 253. A second end 253b of the outer segment 253 can be pivotably coupled with the extendable bar assembly 212. A second end 252b of the inner segment 252 can be pivotably coupled with the mounting structure 208 Similarly, a second extendable arm 256 of the extendable arms 250 can comprise an outer segment 255 and an inner segment 254. The inner segment 254 can be pivotably connected at a first end 254a with a first end 255a of the outer segment 255. A second end 255b of the outer segment 255 can be pivotably coupled with the extendable bar assembly 212. A second end 254b of the inner segment 254 can be pivotably coupled with the mounting structure 208. By pivoting at these connections, the extendable arms 250 can be folded such that the extendable bar assembly 212 can be positioned adjacent to the mounting structure 208 or extended away from the mounting structure 208 in an extended position by unfolding the extendable arms 250.

The extendable arms 250 can extend between the mounting structure 208 and the extendable bar assembly 212 and provide support for the extendable bar assembly 212 at the extended position. In some embodiments described herein, the extendable arms 250 are biased to extend from a folded position in which the extendable bar assembly 212 is adjacent to the mounting structure 208 to an extended position in which the extendable bar assembly 212 is away from the mounting structure 208 in the extended position. An upper canopy 232 can thus be stretched between the extendable bar assembly 212 and the mounting structure 208.

Any of the pivotable connections of the extendable arms 250 can comprise or be coupled with a biasing mechanism (not shown) that exerts a force or a moment on the extendable arms to unfold them and extend them away from the mounting structure 208. In some embodiments, the extendable arms 250 are spring loaded or otherwise biased to extend out away from the awning mounting structure 208 and to move the extendable bar 212 into the extended position. The biasing mechanism can be as simple as a flexible bar or spring coupled with the pivotable connections. In some embodiments, the biasing mechanism can be coupled with and configured to rotate the inner segments 252, 254 away from the mounting structure 208 about the second ends 252b, 254b. In some embodiments, the biasing mechanism can be configured to rotate the inner segments 252, 254 away from the outer segments 253, 255.

As discussed above, the mounting structure 208 can further comprise the awning extender 210. If the extendable arms 250 are spring biased to an extended configuration that can correspond to the extended position of the extendable bar assembly 212, the awning extender 210 can be coupled with the base roller 220 to control the unfurling of the upper canopy 232 and thereby control the extension of the extendable bar assembly 212. In some embodiments, the awning extender 210 can be a motor or a crank or similar for controlling the rotation of the base roller 220 and the extension of the upper canopy 232 from the base roller 220. The upper canopy 232 can be attached at an inner end to the base roller 220 and the length of the upper canopy 232 is wrapped around the base roller 220. By controlling the rotation of the base roller 220 with the awning extender 210 against the extension of the extendable arms 250, the extension of the extendable bar assembly 212 can be controlled, in one embodiment.

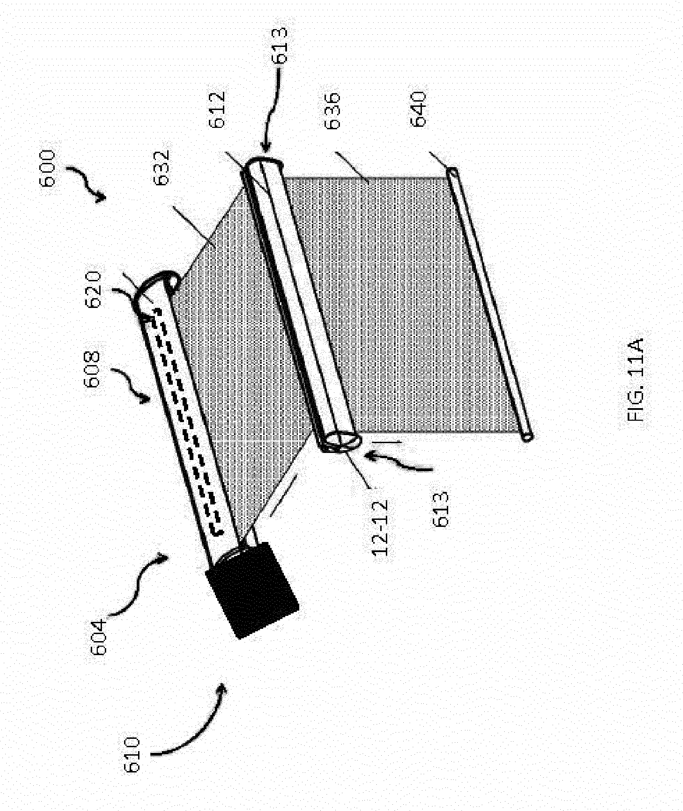

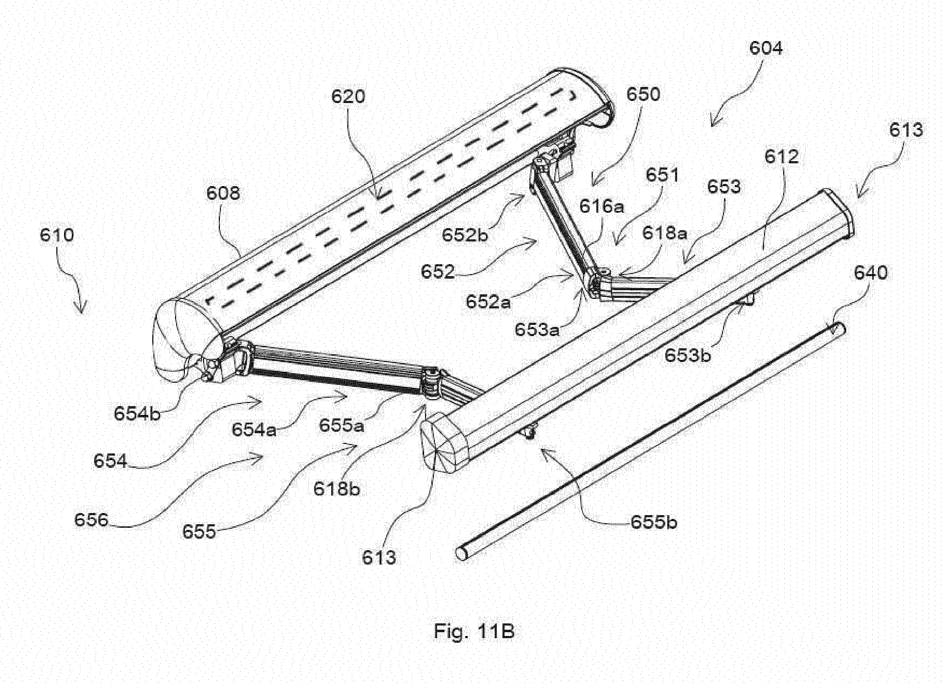

If the extendable arms 250 are not spring biased to an extended configuration, the awning extender 210 can be coupled with the extendable arms to control the extension of the extendable bar assembly 212 as described below in the context of Figures 11-13 and awning assembly 600.

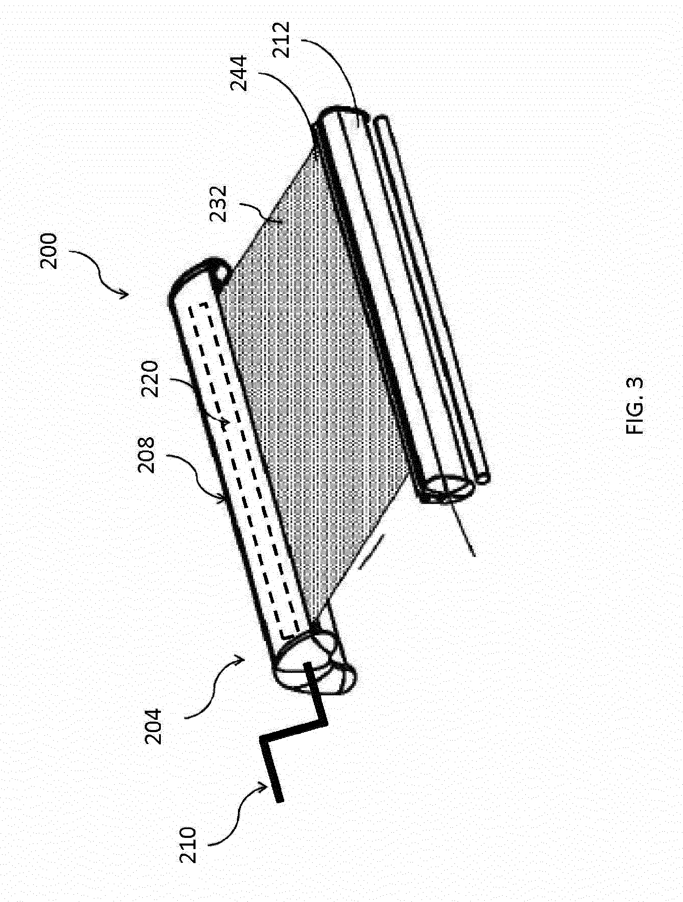

As shown in **Figure 3****,** the base roller 220 can have the upper canopy 232 furled around a circumferential surface of the base roller 220. In some embodiments, the upper canopy 232 is coupled with the extendable bar assembly 212 at an outer end 244 of the upper canopy 232. As the upper canopy 232 is allowed to be unfurled from the base roller 220 by the awning extender 210 the extendable bar assembly 212 is allowed to be moved laterally outwards by the extendable arms 250. In some embodiments, the extendable arms 250 are biased such that the awning extender 210 acts to control the unfurling of the upper canopy 232 from motion of the arms extending away from the mounting structure 208. The extendable arms 250 can provide a tension across the upper canopy 232 to keep it taut as the extendable bar assembly 212 extends outwardly. The awning extender 210 can be as simple as a hand crank or it could be a motor coupled with the base roller 220 for controlling the rotation of the base roller 220 against biased extension of the extendable arms 250. Other means of controlling the rotation of the base roller 220 can be provided, such as a gear train actuated by a rope, chain, or belt, or a worm gear coupled with the awning extender and configured to turn a worm wheel coupled with the base roller 220. In some embodiments, a user can control the outward extension of the upper canopy 232 by actuating only the awning extender 210.

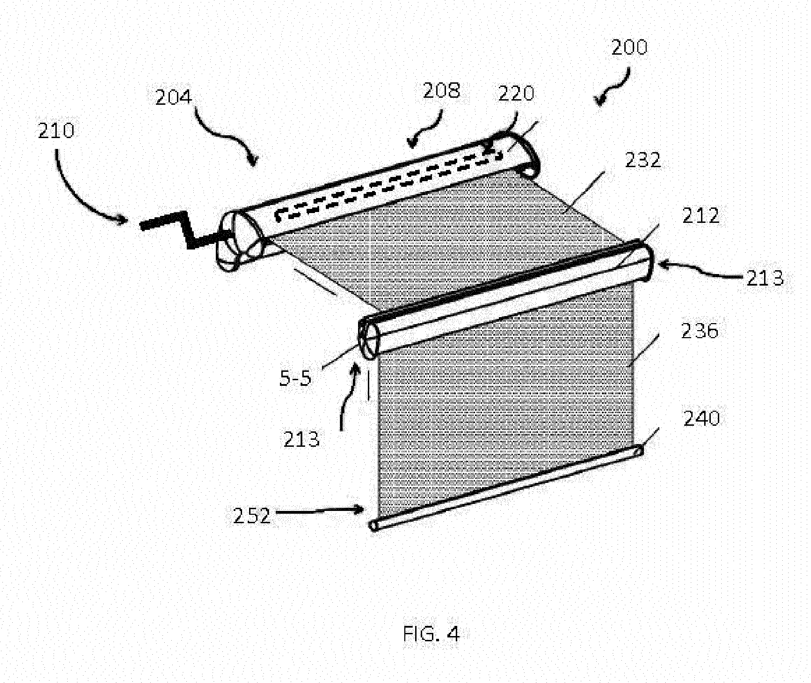

In **Figure** 4 the extendable bar assembly 212 comprises a lower canopy 236 configured to be extended away from the extendable bar assembly 212. A lower canopy bar 240 can be coupled with a lower end 252 of the lower canopy 236. After the extendable bar assembly 212 is extended by the extendable arms 250 to an extended position (or away from mounting structure 208) the lower canopy 236 can be extended from the extendable bar assembly 212. In some embodiments, this extension of the lower canopy 236 is assisted using potential energy stored in the extendable bar assembly 212. For example, the potential energy can be in the form of potential energy stored by the lower canopy bar 240 by virtue of its weight with respect to gravity. In another embodiment, a spring 290 is provided to store and release potential energy.

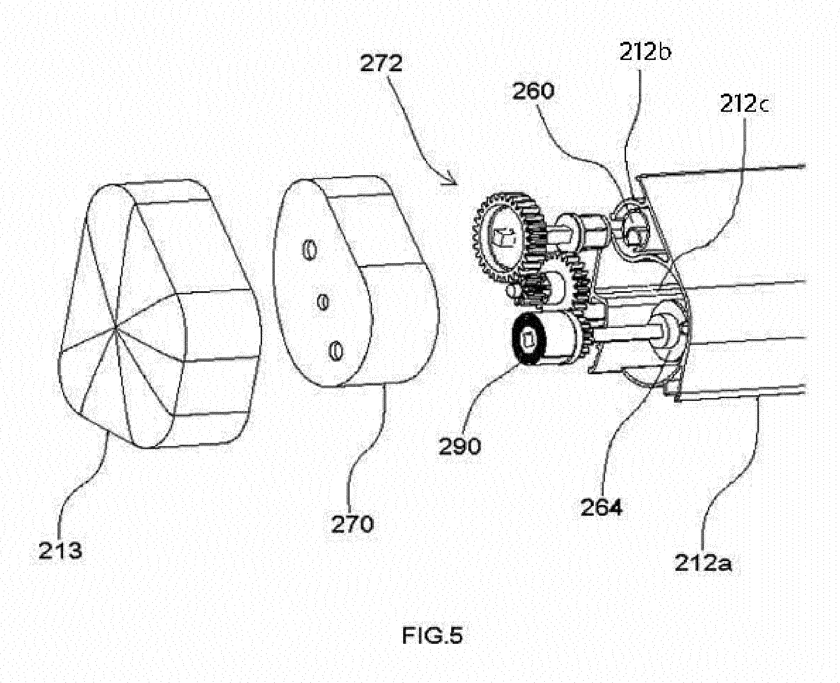

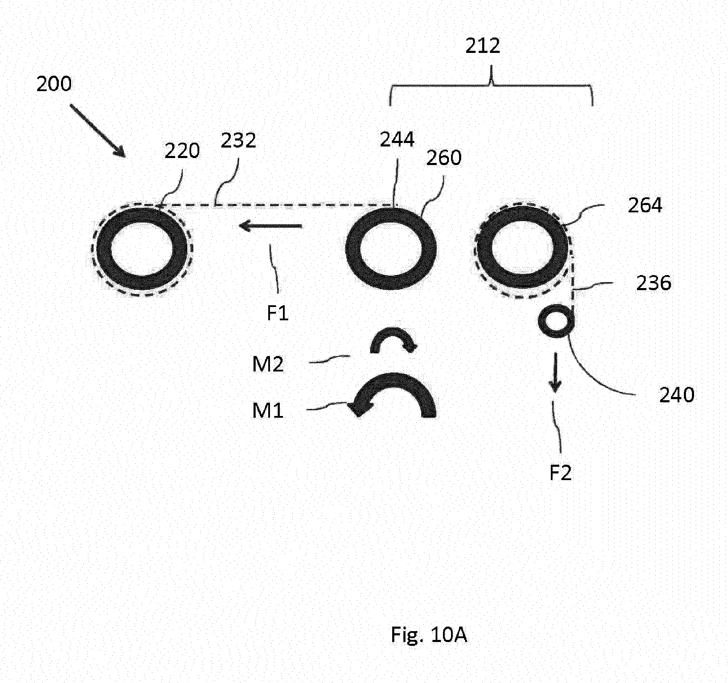

**Figure** 5 shows that the extendable bar assembly 212 can comprise a slack roller 260 and a vertical roller 264 rotationally coupled with the extendable bar assembly 212. As described in more detail below, the slack roller 260 can be a first roller of an extendable bar assembly 212 that includes a plurality of rollers. The vertical roller 264 can be a second roller of the extendable bar assembly. Optionally, the extendable bar assembly 212 comprises a housing 212a containing the slack roller 260 and the vertical roller 264. The housing 212a can also have first and second housing compartments 212b, 212c that comprise hollow cylindrical tubes or spaces corresponding to and containing the slack roller 260 and the vertical roller 264, respectively. The lower canopy 236 can be coupled with the vertical roller 264 of the extendable bar assembly 212 and can be furled and unfurled about a circumferential surface of the vertical roller 264 by rotation of the vertical roller 264. The lower canopy 236 can be extended from the extendable bar assembly 212 by unfurling the lower canopy 236 from the vertical roller 264 and can be retracted by furling the lower canopy about the vertical roller 264. In some embodiments, the upper canopy 232 is coupled with the slack roller 260 at an outer end 244 of the upper canopy 232. A slack length 248 of the upper canopy 232 (as shown in Figures 10A-10D) can comprise a portion of the outer end 244 to be furled and unfurled about a circumferential surface of the slack roller 260 by rotation of the slack roller 260.

A motion generator can rotationally couple the slack roller 260 with the vertical roller 264. In some embodiments, the motion generator includes a transmission 272 rotationally connecting the slack roller 260 with the vertical roller 264 using any suitable configuration such as, but not limited to a plurality of gears, pulleys, belts or frictionally engaged wheels, etc. For example, the transmission 272 can comprise gears 273, 275. The gear 273 can be rotationally coupled with the slack roller 260 through an axle 271 that extends through both the slack roller 260 and the gear 273. The gear 273 can thus be rotationally linked with the rotations of the slack roller 260. The gear 273 can be rotationally coupled with a vertical roller 264 by an axle 274. The gear 275 can thus be rotationally linked with the rotations of the vertical roller 264.

The gears 273, 275 include teeth that can be meshed such that rotation from either one is transferred to the other. In some embodiments, the transmission 272 can further comprise a compound gear 276 or another form of an idler gear (not shown) or other indirect coupling between the gears 273, 275. Both of the gears 273, 275 can be meshed with the compound gear 276 or the idler gear or other indirect coupling such that the gears 273, 275 are rotationally coupled or linked directly or indirectly. In some embodiments, a plurality of idler gears is disposed between the gears 273, 275.

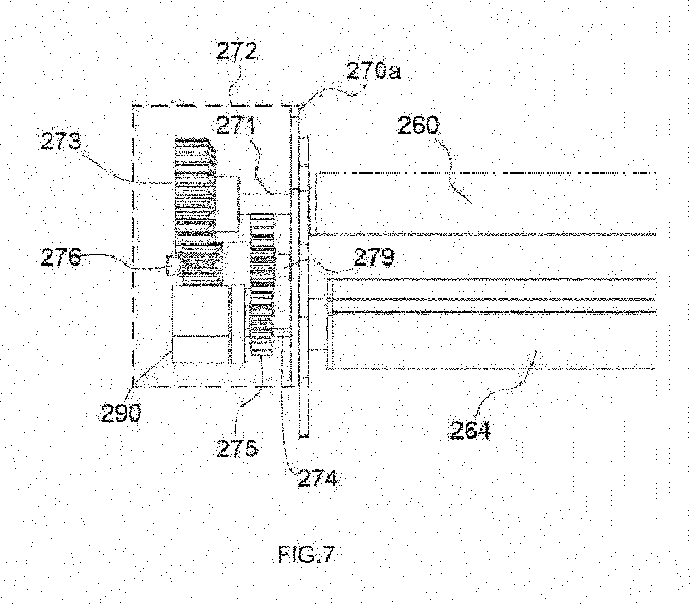

In some embodiments, the transmission 272 can be contained within a housing 270 on one end 213 of the extendable bar 213, such as is illustrated in Figure 5. The housing 270 can be coupled with a corresponding plate 270a, such as is illustrated in Figure 7. The housing 270 and/or the plate 270a can provide structure and spacing for supporting the components of the transmission 272, such as the gears 272, 273 and/or end portions of the axles 271, 274 of the roller 260, 264, respectively. The axles 271, 274 can be coupled with plate 270a and/or the housing 270 and rotatably supported thereby. The gears 272, 273 can be supported on the axles 271, 274 and fixedly coupled therewith, such that they rotate with the rollers, 260, 264, respectively.

The transmission 272 can further define a ratio of rotation between the slack roller 260 and the vertical roller 264. In some embodiments, the diameters of the gears 273, 275 can define the ratio of rotation between the rollers 260, 264. In some embodiments, the compound gear 276 has a first end gear 278 having a first diameter and a second end gear 277 having a second diameter. The compound gear 276 can be rotatably supported by or between the plate 270a and/or the housing 270 on an axle 279. The first and second diameters of the first and second end gears 277, 278 can be different, such that the compound gear 276 can step up or step down rotations of gears 273, 275 coupled with the first and second gear ends 277, 278. Thus the first and second end gear 277, 278 diameters of the compound gear 276 can in part define the ratio of rotation between the rollers 260, 264.

In some embodiments, the ratio of rotation of input and output shafts of the transmission 272 is relatively high from the perspective of the slack roller 260 with respect to the vertical roller 266. As illustrated, the gear ratio between the gear 273 and the gear 275 is greater than 2:1. Thus, small amounts rotation of the slack roller 260 can translate into large rotations of the vertical roller 264. In some embodiments, the ratio of rotation of the transmission 272 is relatively low from the perspective of the slack roller 260 with respect to the vertical roller 266. Thus, rotation of the slack roller 260 can translate into small rotations of the vertical roller 264. In other embodiments, the ratio of rotation can be approximately equal or 1:1 such that the rotation of the slack roller 260 is approximately equivalent to the rotation of the vertical roller 264. Here, "approximately equal" can take into account the rotation of the rollers, but not the rotation of the already furled length of the canopies about the rollers, which can alter the actual lengths furled or unfurled. In some alternate embodiments a ratio of 1:1, 1:2, 1:5, 1:10, or 1:50 (rotations of slack roller 260 to rotations of vertical roller 264), can be used to use between the slack roller 260 and the vertical roller 264. In other embodiments, the ratio of the rotations of the vertical roller 266 to the slack roller 260 is in a range of 1:1 to 1:50 or in a range of 1:1 to 1:10 or in a range of 1:2 to 1:7 or approximately 1:5. In another embodiment, where the compound gear 276 is provided a ratio between the gear 273 and the portion of the gear 276 meshed with the gear 273 is around 29:9. In one embodiment, where the compound gear 276 is provided a ratio between the other portion of the gear 296 and the gear 295 meshed with the other portion of the gear 296 is 23:13. The ratio of rotation of the input and output shafts of the transmission 272 can be selected based on the desired rotational relationship between the slack roller and vertical roller 260, 264.

In some embodiments, the slack roller 260 rotates and furls a portion of the slack length 248 about the circumferential surface of the slack roller. Depending on the ratio of rotation of the transmission 272 as just described, this rotation of the slack roller 260 has a corresponding rotation in the vertical roller 264 that can furl or unfurl a length of the lower canopy 236. Thus, the slack length 248 and the extension/retraction of the lower canopy 236 can be corresponding according to the ratio of rotation. As one non-limiting example, the extendable bar assembly 212 can include the transmission 272 with the ratio of rotation of 1:5. A 10 cm length of the slack length 248 taken up by the slack roller 260 corresponds to approximately a 50 cm length of the lower canopy 236 being unfurled from the vertical roller 264 and the 10 cm length of the slack length 248 being unfurled from the slack roller correspond to the approximately 100 cm length of the lower canopy 236 being furled on the vertical roller 264. As another example, a 1:5 ratio is provided. In this embodiment a 2.54 cm length of the slack length 248 taken up by the slack roller 260 corresponds to approximately a 12.7 cm length of the lower canopy 236 being unfurled from the vertical roller 264 and the 2.54 cm length of the slack length 248 being unfurled from the slack roller correspond to the approximately 12.7 cm length of the lower canopy 236 being furled on the vertical roller 264. As another example, a 1:10 ratio is provided. In this embodiment a 2.54 cm length of the slack length 248 taken up by the slack roller 260 corresponds to approximately a 25.4 cm length of the lower canopy 236 being unfurled from the vertical roller 264 and the 2.54 cm length of the slack length 248 being unfurled from the slack roller correspond to the approximately 25.4 cm length of the lower canopy 236 being furled on the vertical roller 264. In one embodiment, the slack length is around 380 mm and the length of the extension of the lower canopy 236 is around 1,900mm.

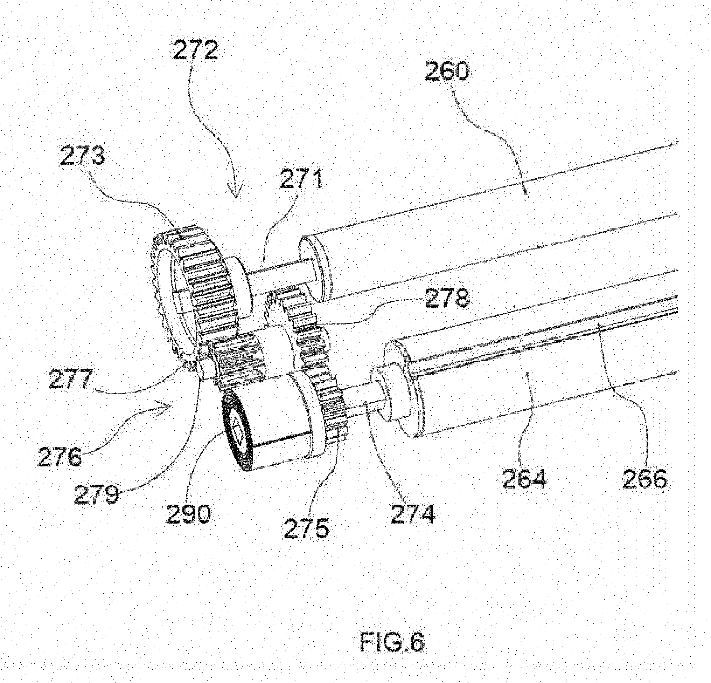

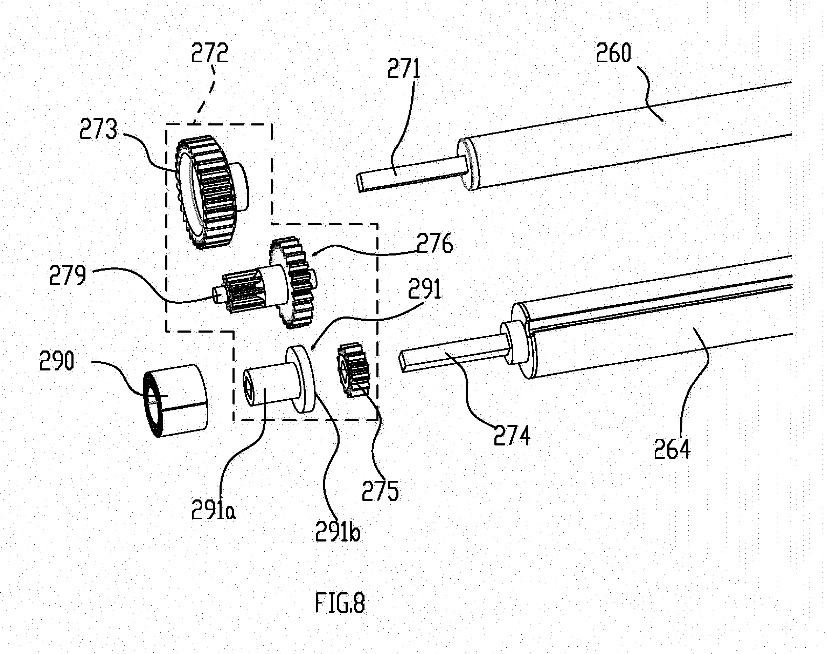

The motion generator, which can include the transmission 272, can be biased to cause the rotation of the vertical roller 264 in a controlled manner as discussed further below. In some embodiments, such as illustrated in Figures 5-8, the transmission 272 includes a spring 290. The spring 290 can be coupled with the axle 274 of the vertical roller 264 and configured to store potential energy. The spring 290 can be configured such that rolling up the lower canopy 236 about the vertical roller 264 to retract or furl the lower canopy 236 will further coil to store potential energy in the spring 290. Other spring configurations can be provided that function by compressions and without coiling and uncoiling. In some embodiments of the spring 290, a first end thereof is coupled directly or indirectly with the axle 274 of the vertical roller 264 and a second end thereof is coupled with a locally fixed surface such as the housing 270 or the plate 270a within which the transmission 272 is disposed. Thus, in some embodiments, rotation of the vertical roller 264 and/or the vertical roller gear 275 can directly or indirectly cause or allow of coiling or uncoiling the spring 290. In some embodiment, the spring 290 can be coupled with the axle 271 of the slack roller 260 or the axles 279 of the compound gear 276. The spring 290 could be directly coupled with one of the gears 273, 275, 276 in other embodiments.

In some embodiments, the transmission 272 further comprises a cylindrical member 291 on which the spring 290 is coiled. The cylindrical member 291 can comprise a lower cylindrical portion 291a on which the spring is coiled and an upper ridge 291b. The lower cylindrical portion 291a can include a central aperture within which the axle 274 can be received. In other embodiments, the central aperture of the lower cylindrical portion 291a can receive the axle 271 or 279. The first (inner) end of the spring 290 can be coupled with the lower cylindrical portion such that the first end rotates with the axles. The upper ridge 291b can be raised or protruding from the lower cylindrical portion 291a on a least one end of the coupler 290 or on both ends. The upper ridge 291 can provide stability for the spring 290 as it coils. The upper ridge 291b can shield or separate the spring 290 from the other elements in the housing 270, such as the gear 275 or other elements of the transmission 272. A second (outer) end of the coiled spring 290 can be coupled with a locally fixed portion of the extendable bar 212, such as the housing 270 or plate 270a.

The spring 290 is biased such that when released, the potential energy of the spring can be used to unfurl the lower canopy 236 from the vertical roller 264. In some embodiments this can include sufficient potential energy on its own to completely unfurl the lower canopy 236. In other embodiments the potential energy of the spring 290 coupled with the potential energy due to the elevated weight of the lower bar 240 and that of the lower canopy 236 with which it is coupled to completely and/or partially unfurl the lower canopy 236 from the vertical roller 264. In some embodiments the potential energy can be sufficient to also furl the slack length 248 on the slack roller 260 simultaneously with deploying the lower canopy 236.

In some embodiments, the extendable bar assembly includes a motor (not shown) with an output shaft coupled with a motion generator (which can include the transmission 272) for rotating the vertical roller 264. For examples, a user can initiate the motor and the motor can rotate the shaft and thereby rotate the axles 271, 274 of the rollers 260, 264 to extend or retract the lower canopy 236 and to furl or unfurl the slack length 248 from the slack roller 260. The motor can thus control both the extension of the lower canopy and the tension on the upper canopy 232.

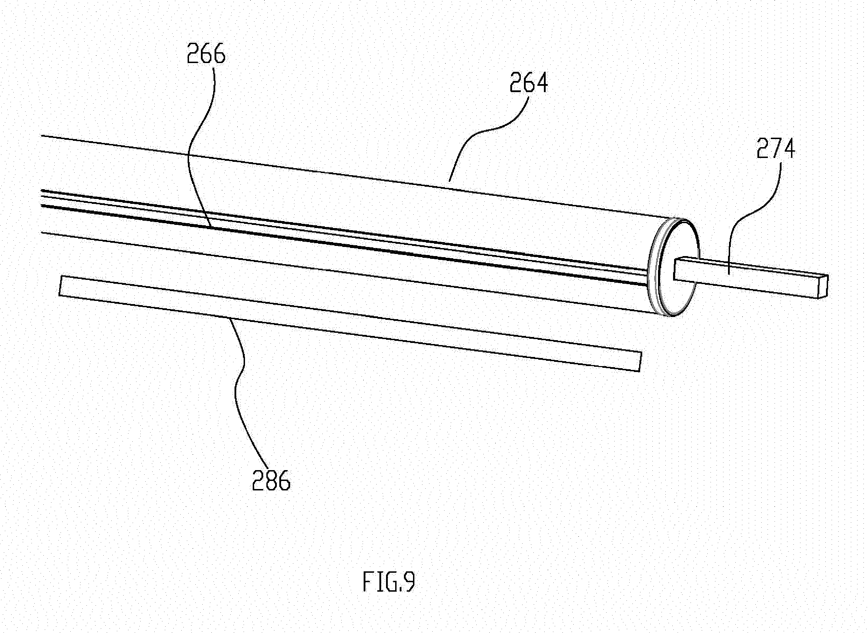

**Figure** 9 illustrates an embodiment of the vertical roller 264 with its corresponding axle 274. Although described herein in terms of vertical roller 264 and axle 274, each of the rollers 220, 260 and corresponding axles can have a similar structure. In some embodiments, the axle 274 extends from one side of the vertical roller 264 and out the other side of the vertical roller 264 such that the axle 274 can be journaled within a portion of the extendable bar assembly 212 for rotating the vertical roller 264 about its axis. For example, at least one end can be journaled in the plate 270a, as described above. Another end can be journaled in a similar plate at the other end of the extendable bar assembly 212 from the end 213.

The vertical roller 264can comprise a groove 266 for receiving and securing an end of the lower canopy 236. The groove 266 can simply be a slot or a groove in which a portion of the lower canopy 236 is placed and a separate bar or insert, such as bar 286, can be placed over the material of the lower canopy 236and held in place by inserting the bar 286 into the groove 266 and securing the bar 286 to the vertical roller 264. The bar 286 can be coupled with the material of the lower canopy 236 prior to being inserted into the groove 266. The bar 286 can be configured as a plurality of short bars each of which is inserted separately into the groove 266. In other embodiments the groove 266 is a receiving slot for sliding a portion of the lower canopy 236 and/or the bar 286 into an interior portion of the vertical roller 264 and for locking one or both of the canopy 236 and bar 286 therein with a clasp, clamp or other locking mechanism, thereby securing the lower canopy 236to the vertical roller 264. The locking mechanism can include configuring the groove 266 with a width that is less than the diameter of the bar 286 such that the bar can be inserted along the longitudinal axis of the groove but not pulled laterally out of the groove through the opening.

In some embodiments, the axle 274 has a cross sectional shape corresponding to an aperture of the gears 275 such that the gear 275 can be rotationally fixed on the axles 274. For example, as illustrated, axle 274 has a square cross-sectional shape and the cross-sectional shape of the inner aperture of the gear 275 is a corresponding cross- sectional square shape. Other cross-sectional areas can include circle, hexagonal or octagonal but are not limited to these cross-sectional profiles.

**Figures 10A-10D** are schematic figures illustrating various aspects of an embodiment of the present disclosure. Figure 10A illustrates the awning assembly 200 comprising the base roller 220 with the upper canopy 232 furled around the base roller 220. The assembly 200 also includes the extendable bar assembly 212 and the lower canopy 236. The extendable bar assembly 212 includes the slack roller 260 and the vertical roller 264.

The slack roller 260 can be configured to be rotationally engaged with the extendable bar assembly 212. Rotation of the slack roller 260 can be rotationally controlled by the awning extender 210. The extension of the extendable bar assembly 212 away from the base roller 220, e.g., by the biased extendable arms 250, applies a tension force F1 across the upper canopy 232. The tension force F1 applied to the slack roller 260 at the outer end 244 of the upper canopy 232 can maintain the slack roller 260 in a fixed rotational position with respect to the extendable bar assembly 212 even while the assembly 212 is moving away from the base roller 220.

The rotation of the slack roller 260 can be coupled with the rotation of the vertical roller 264, such as through the motion generator or transmission 272. The rotation or non-rotation of the slack roller 260 can determine at least in part the rotation or non-rotation of the vertical roller 264. As the extendable bar 212 is moved out away from the base roller 220 and the tension force F1 of the canopy 232 prevents the slack roller 260 from rotating with respect to the extendable bar 212 or about a central longitudinal axis of the slack roller 260, the vertical roller 264 can also be kept from rotating through the coupling thereof with the slack roller 260. The extension (or non-extension) of the lower canopy 236 from the vertical roller 264 can thus be controlled by the rotation (or non-rotation) of the slack roller 260.

Potential energy of the motion generator of the extendable bar assembly 212 can be stored in and released from the awning assembly 200. Potential energy in the form of a weight F2 of the lower bar 240 attached to the lower end of the fabric of the lower canopy 236 and of the fabric, which are raised above the ground when the canopy 236 is furled about the vertical roller 264. In another example, the potential energy can be stored within the coupling between the slack roller 260 and the vertical roller 264, such as in the spring 290. Alternatively, the rotation of the vertical roller 264 can be motorized, such as by the motor on the extendable bar assembly 212 (not shown).

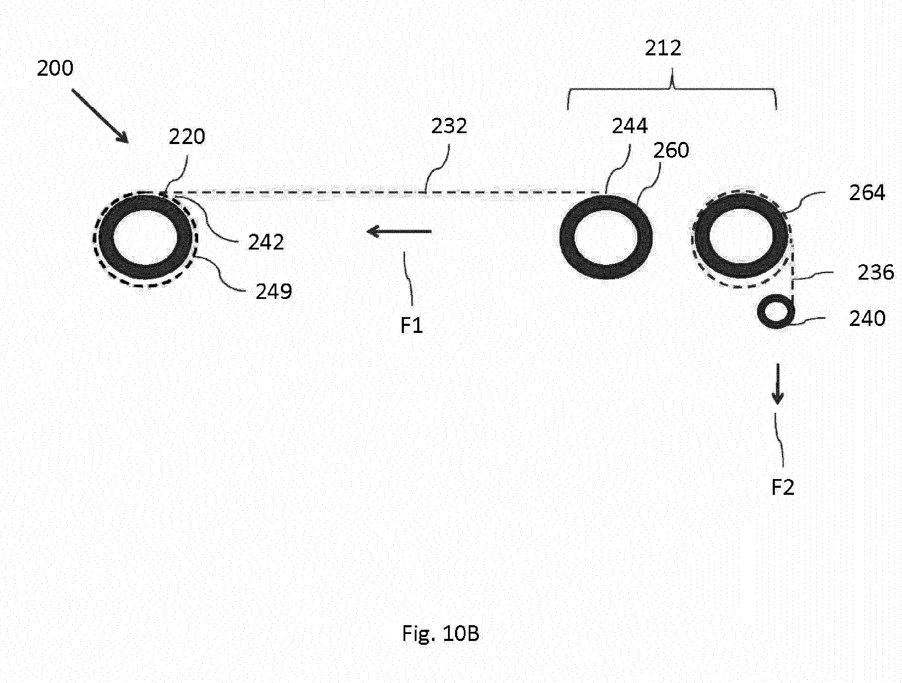

The tension force F1 on the upper canopy and the slack roller 260 can cause a first moment M1 on the slack roller 260 and thereby prevent the slack roller 260 from rotating as the extendable bar 212 is extended (Figure 10A) to its extended position (Figure 10B) away from the base roller 220. In some embodiments, as the extendable bar 212 is extended, the potential energy of the motion generator or the transmission 272 acting on the vertical roller 264 and/or slack roller 260 creates a second moment M2 on the slack roller 260 in an opposite direction from the first moment M1. The second moment M2 can be less than the first moment M1 such that the slack roller 260 is prevented from rotating as it is extended to the extended position illustrated by Figure 10B.

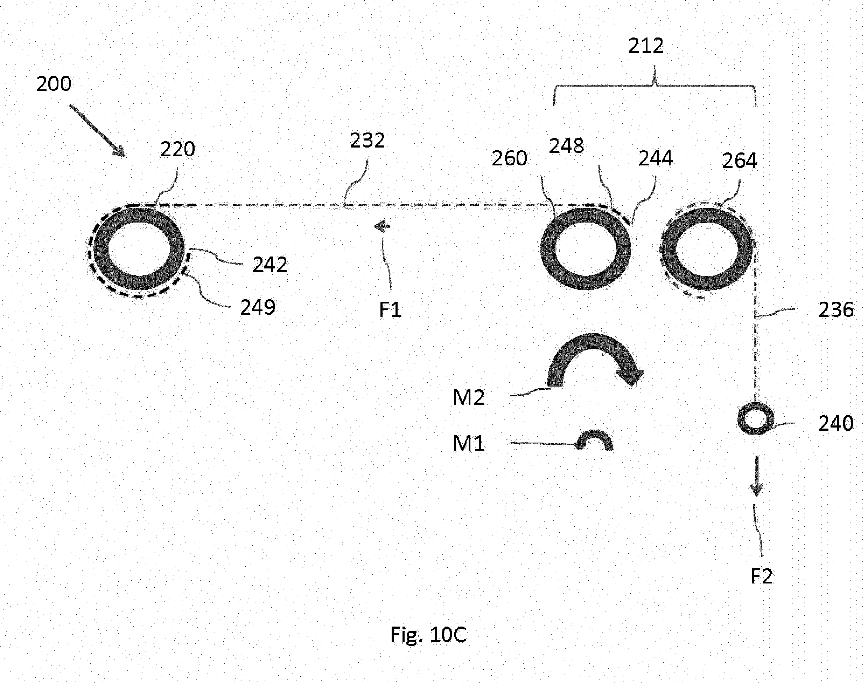

Figures 10B and 10C show that once the extendable bar assembly 212 reaches its outermost extension the base roller 220 can continue to be rotated to let out an additional terminal length 249 of the upper canopy 232. As the terminal length 249 of the upper canopy 232 is unfurled from the base roller 220, the tension force F1 on the upper canopy 232 can be lessened. This lessening of tension can allow the slack roller 260 to be rotated by the second moment M2, the second moment M2 now being greater than the first moment M1 (illustrated schematically by the relative sizes of the arrows). Rotation of the slack roller 260 can furl the slack length 248 of the upper canopy 232 about the slack roller 260.

In some embodiments, once the slack roller 260 is allowed to rotate or rotates, the vertical roller 264 rotates the transmission 272 between the vertical roller 264 and the slack roller 260. The vertical roller 264 can be rotated corresponding to the rotation of the slack roller 260 and the lower canopy 236 can be unfurled from the vertical roller 264. In those embodiments with biasing of the vertical roller 264, the potential energy stored in or on the extendable bar assembly 212 can be expended to rotate the vertical roller 264 and the slack roller 260. The potential energy can be used to extend the lower canopy 236 from the vertical bar 264.

Once the slack length 248 is taken up by the slack roller 260, further rotation of the slack roller 260 and the vertical roller 264 in the direction of the second moment M2 is prevented by the tension on the upper canopy 232, the first moment M1 again being greater than the second moment M2. This can also allow for the upper canopy 232 to again be maintained under tension either by the biasing of the extendable arms 250 or by the potential energy of the motion generator or transmission 272.

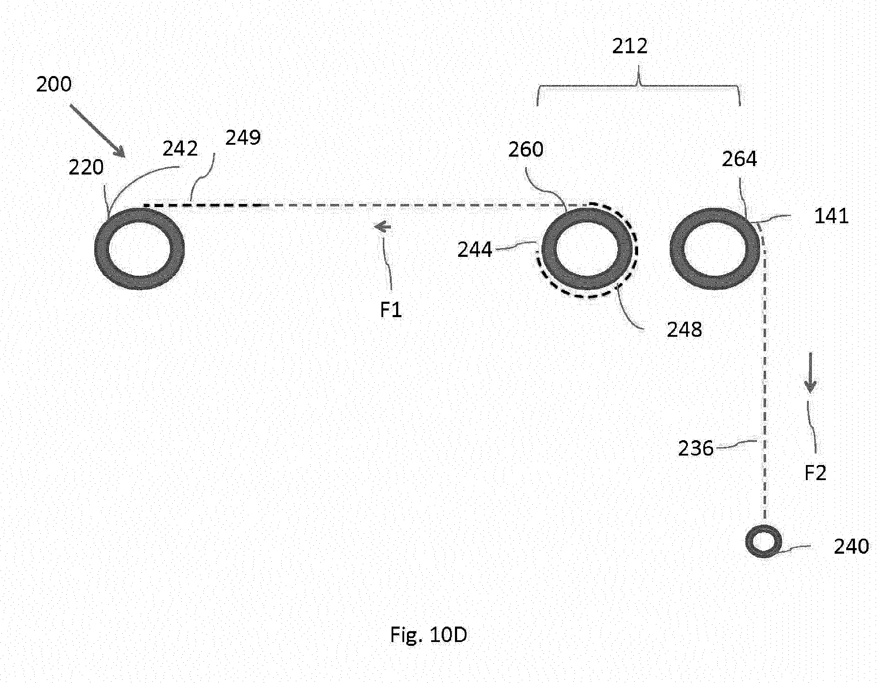

Figure 10D illustrates the extension of the lower canopy 236 from the vertical roller 264. In some embodiments, the lower canopy 236 is fully extended from the vertical roller 264 when the extent of the terminal length 249 has been unfurled from the base roller 220. In other embodiments, the lower canopy 236 may be less than fully extended from the vertical roller 264 when the extent of the terminal length 249 has been unfurled from the base roller 220. In some embodiments, the extension of the lower canopy 236 to an extent provided by the potential energy of the motion generator or transmission 272.

Retraction of the lower canopy 236 can be accomplished by furling the terminal end 249 about the base roller 220, unfurling the slack length 248 from the slack roller 260 and thereby rotating the slack roller 260 and the vertical roller 264. The rotation of the slack roller 260 is rotationally coupled with the vertical roller 264 as discussed above. Such rotation furls the lower canopy 236 about the vertical roller 264. Retraction of the lower canopy 236 about the vertical roller 264 can store the potential energy in the extendable bar 212, such as through the raising of the lower bar 240 or the coiling of a spring.

**Figure 11A** illustrates an awning assembly 600 according to another embodiment of the present disclosure. Awning assembly 600, similar to the awning assembly 200 described above, can comprise an awning frame assembly 604 with a base roller 620, an awning extender 610, an extendable bar assembly 612, a mounting structure 608 to mount on a solid or rigid structure and from which the extendable bar assembly 612 can be extended. An upper canopy 632 can be coupled on one end with the base roller 620 on the mounting structure 608 and another end coupled with the extendable bar assembly 612. The upper canopy 632 can thus be stretched between the extendable bar assembly 612 and the mounting structure 608. A lower canopy 636 can be extended or lowered from the extendable bar assembly 612.

**Figure 11B** shows the awning frame assembly 604 with the extendable bar assembly 612 extended away in a horizontal direction from the mounting structure 608. The awning frame assembly 604 can comprise one or a plurality, e.g., a pair, of extendable arms 650. The extendable arms 650 can extend between the mounting structure 608 and the extendable bar assembly 612 and provide support for the extendable bar assembly 612 at an extended position. A first extendable arm 651 of the extended arms can comprise an outer segment 653 and an inner segment 652. The inner segment 652 can be pivotably connected at a first end 652a with a first end 653a of the outer segment 653. A second end 653b of the outer segment 653 can be pivotably coupled with the extendable bar assembly 612. A second end 652b of the inner segment 652 can be pivotably coupled with the mounting structure 608. Similarly, a second extendable arm 656 of the extendable arms 650 can comprise an outer segment 655 and an inner segment 654. The inner segment 654 can be pivotably connected at a first end 654a with a first end 655a of the outer segment 655. A second end 655b of the outer segment 655 can be pivotably coupled with the extendable bar assembly 612. A second end 654b of the inner segment 654 can be pivotably coupled with the mounting structure 608. By pivoting at these connections, the extendable arms 650 can be folded such that the extendable bar assembly 612 can be positioned adjacent to the mounting structure 608 or extended away from the mounting structure 608 in the extended position by unfolding the extendable arms 650.

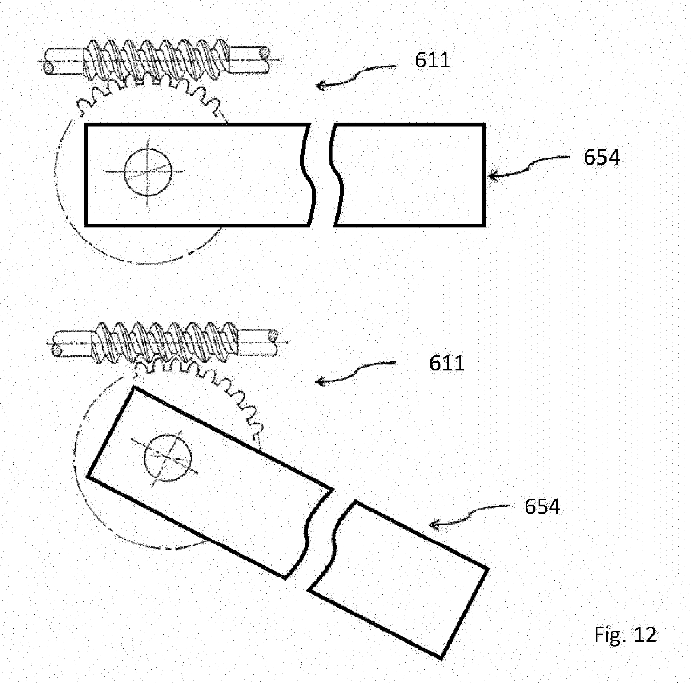

The awning extender 610 can be an electric motor or a hand crank having a shaft coupled with one or more of the extendable arms 650 and configured to control the extension of the extendable arms 650 between the stowed and extended positions. For example, **Figure 12** illustrates a worm wheel and worm gear set 611 coupled with the inner segment 654 of the extendible arm 652. The worm gear can be coupled with the awning extender 610 and configured to rotate in response to actuation of the awning extender 610. For example, the shaft of the awning extender 610 can be coupled with the worm gear either directly or through a gear train. The worm gear can be coupled with the worm wheel which rotates in response to rotation from the worm wheel. The rotation of the worm wheel controls the rotation of the inner segment 654 about its pivot and thus the extension and retraction of the extendable arms 650 and the extendable bar assembly 612.

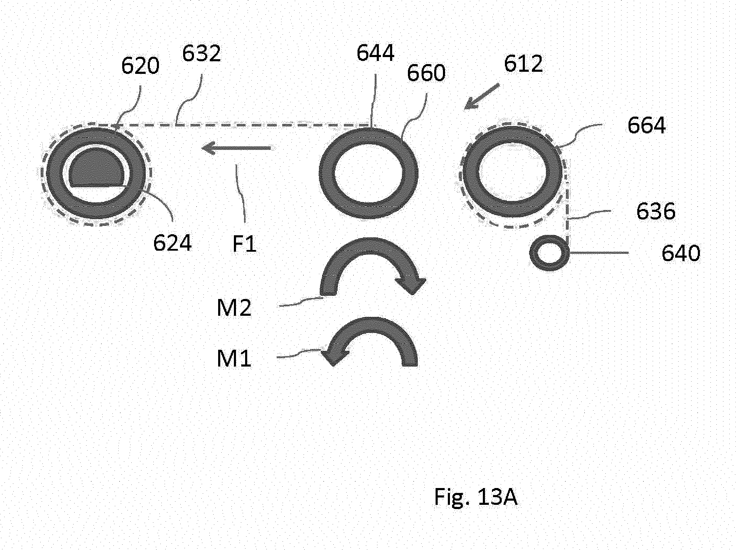

The base roller 620 can have the upper canopy 632 furled around a circumferential surface of the base roller 620. The extension of the extendable bar assembly 612 and the extendable arms 650 unfurls the upper canopy 632 from the base roller 620. As the awning extender 610 moves the extendable arms 650 laterally outwards, the upper canopy 632 unfurls from the base roller 620. In some embodiments, the base roller 620 includes a brake 624 (described more fully in the context of Figures 13A-13C) such that the base roller 620 can create a tensioning on the upper canopy 632 and counteracts the motion of the arms extending away from the mounting structure 608. In some embodiments, the brake 624 comprises a rubber foot applied against the base roller 620, such as on an inside surface of the base roller 620. The base roller 620 can thus provide a tension across the upper canopy 632 to keep it taut as the extendable bar assembly extends outwardly.

The extendable bar assembly 612 can have a structure and functionality similar to the extendable bar assembly 212 as described above and illustrated in Figures 5-8. For example, the extendable bar assembly 612 can comprise a slack roller 660 and a vertical roller 664 rotationally coupled with the extendable bar assembly 612. The lower canopy 636 can be coupled with the vertical roller 664 and can be furled and unfurled about a circumferential surface of the vertical roller 664 by rotation of the vertical roller 664. A motion generator, such as a transmission 672, can rotationally couple the slack roller 660 with the vertical roller 664. The transmission 672 can have the same structure and functionality as the transmission 272 described above. The transmission 672 can comprise gears 673, 675, a compound gear 676, a housing 670, a mounting plate 670a, and the axles 671, 674, and 679 of the corresponding gears 673, 675, and 676, respectively. The axles 671, 674, and 679 can be coupled with plate 670 and be rotatably supported thereby. The transmission 672 can further define a ratio of rotation between the slack roller 660 and the vertical roller 664, as described above.

The motion generator, such as transmission 672, can be biased such that when released, the motion generator can unfurl the lower canopy 636 from the vertical roller 664. In some embodiments, the motion generator comprises a spring 690, like the spring 290, the weight of a lower bar 640 (Figure 11A), or a motor coupled with the transmission for rotating components of the transmission 672. In some embodiments, the transmission 672 further comprises a cylindrical member 691 on which the spring 690 is coiled and comprising a structure and function similar to cylindrical member 291. The cylindrical member 691 can comprise a lower cylindrical portion 691a and an upper ridge 691b. The lower cylindrical portion 691a can include a central aperture within which the axle 674 can be received. The spring 690 is biased such that when released, the potential energy of the spring can be used to unfurl the lower canopy 636 from the vertical roller 664. In some embodiments this can include sufficient potential energy on its own to completely unfurl the lower canopy 636. In other embodiments the potential energy of the spring 690 coupled with the potential energy of the lower bar 640 is used to completely and/or partially unfurl the lower canopy 636 from the vertical roller 664.

The extension of the extendable arms 650 away from the mounting structure 608 and the movement of the extendable bar assembly 612 into the extended position can be controlled by the awning extender 610. As depicted in **Figure 13A****,** as the extendable arms extend from the stowed position, the upper canopy 632, coupled with the extendable bar assembly 612 on one end, can be unfurled from the base roller 620 and extended between the mounting structure 608 and the extendable bar assembly 612.

The rotation of the base roller 620 and the unfurling of the upper canopy 632 can be limited by the brake 624. The brake 624 of the base roller 620 can also create a tension F1 on the upper canopy 632 as it extends out away from the mounting structure 608 on the extendible arms 650. This tension F1 created in the upper canopy 632 also has the effect of preventing rotation of the slack roller 660. A first moment M1 on the slack roller from the tension F1 on the upper canopy 632 can prevent the slack roller from rotating to furl the slack length 648. A second moment M2 from the potential energy in the transmission 672 can also act on the slack roller 660 in the opposite direction to the first moment. So long as the first moment on the slack roller 660 from the tension in the upper canopy 632 is greater than the second moment from the transmission 672, the slack roller 660, in some embodiments, does not rotate as the extendable bar assembly 612 extends out from the mounting structure 608.

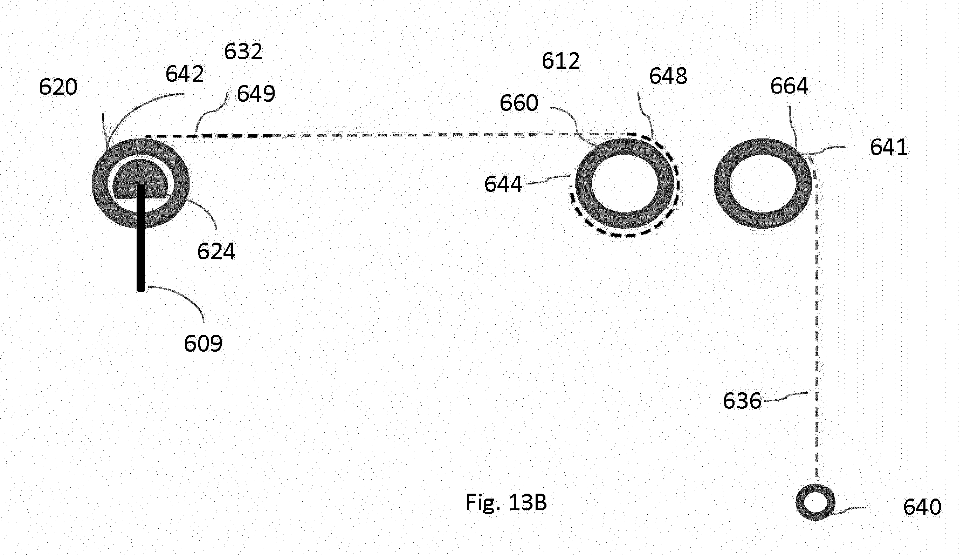

After the extendable bar assembly 612 reaches the extended position on the extendable arms 650, as shown in **Figure 13B****,** any further unfurling of a terminal length 649 (not shown) of the upper canopy 632 by the awning extender 610 can create slack in the upper canopy 632 and reduce the tension. This can reduce the first moment M1, and allow a rotation of the slack roller 660 due to the second moment M2. The terminal length 649 that is unfurled from the base roller 620 after the extendable bar assembly 612 reaches its extended position can allow the slack roller 660 to furl the slack length 648 of the upper canopy 632.

In some embodiments, the brake 624 comprises a rubber foot stabilized locally relative to the mounting structure 608 and applied against the base roller 620, such as on an inside surface of the base roller 620. For example, the brake 624 can include a threaded shaft coupled with the rubber foot and supported by an extension of the mounting structure 608; the rotation of the threaded shaft can modify a pressure applied against the base roller 620. The brake 624 can be manually (such as by a user) released by lowering the pressure between the base roller and rubber foot of the brake 624 to allow the terminal length 649 to unfurl from the base roller 620. This releasing of the brake 624 can be performed after the extendable arms have be actuated to the extended position of the extendable bar assembly 612.

In some embodiments, the slack roller 660 is biased to furl the slack length 649 by the second moment M2 from the potential energy stored in the transmission 672, such as the spring 690 or the potential energy in the lower canopy bar 640 and/or the weight of the lower canopy 636. As the slack roller 660 rotate, the vertical roller 664 also rotates through its coupling with the slacker roller 660 via the transmission 672. The vertical roller 664 can unfurl a portion of the lower canopy 636 as the vertical roller 664 rotates. The ratio of rotation of the transmission 672, as similarly discussed above in the context of transmission 272, determines the ratios of the slack length 648 and the portion of the lower canopy 636 unfurled from the vertical roller 664.

The process of releasing the brake 624 can be continued until all of the terminal length 649 is unfurled from the base roller 620 or the potential energy of the transmission 672 is expended. In some embodiments, the transmission contains enough potential energy to unfurl the entire lower canopy 636 and still maintain the second moment M2 such that the second moment M2 creates a tension F1 across the upper canopy 632.

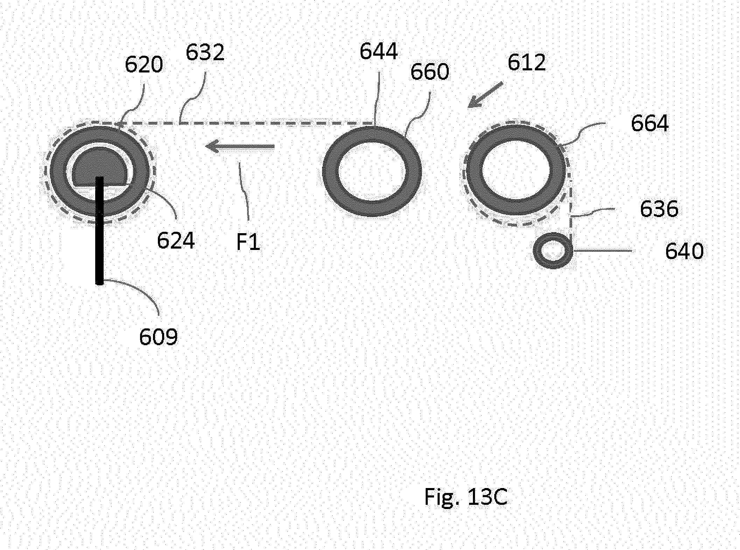

As depicted in **Figure 13C****,** to furl the upper canopy 632 about the base roller 620, the base roller 620 can include a rotatable shaft 609 coupled with a hand crank or motor for rotating the base roller 620 to furl the upper canopy 632. The brake 624 can also be engaged to bias the base roller 620, such that the brake 624 creates tension F1 in the upper canopy 632. Rotating the base roller 620, such as with the rotatable shaft 609, can result in furling the terminal length 649 about the base roller 620. Tension F1 from rotating the base roller 620, such as with the rotatable shaft 609, can result in the first moment M1 being larger than the second moment M2 on the slack roller 660 and thereby cause the slack roller 660 to rotate to unfurl the slack length 648. The rotation of the slack roller 660 allows the rotation of the vertical roller 664 (via the transmission 672) to retract the lower canopy 636. Rotation of the of the base roller 620 with the rotatable shaft 609 to furl the upper canopy 632 about the base roller 620 and furl the lower canopy 636 about the vertical roller 664 can also be coupled with or performed in addition to the awning extender 610 being actuated to retract the extendable arms 650 and to stow the extendable bar assembly 612 adjacent to the mounting portion 608. The extension and/or retraction of both the upper canopy 632 and the lower canopy 636 can be controlled by actuating the awning extender 610, the brake 624 and/or rotatable shaft 609.

As used herein, the relative terms "top" and "bottom" shall be defined from the perspective of an upright vertically supported umbrella assembly. Thus, top or upper refers the direction toward the exposed side of the upper canopy 132, 632 when so supported.

Although particular embodiments of the invention have been described in detail, it will be understood that the invention is not limited correspondingly in scope, but includes all changes and modifications coming within the terms of the claims appended hereto.

## Claims

1. An awning assembly(200), comprising:
an awning frame assembly (204) comprising a mount portion (208), an extendable bar assembly (212), and at least one extendable arm (250, 251, 256) having a first end (252, 254) coupled with the mount portion (208) and a second end (253, 255) coupled with the extendable bar assembly (212);
an upper canopy (232) having a first end coupled with a base roller (220) of the mount portion (208) and a second end (244) coupled with a first roller (260) of the extendable bar assembly (212), the upper canopy (232) being retractable about the base roller (220);
a lower canopy (236) having a first end coupled with a second roller (264) of the extendable bar assembly (212) and a second end (252) extendable from the extendable bar assembly (212), the lower canopy (236) being retractable about the second roller (264) and extendable from the extendable bar assembly 212);
the awning frame assembly (204) having a stowed position in which the extendable bar assembly (212) is adjacent the mount portion (208) and an extended position in which the extendable bar assembly (212) is extended by the extendable arm (250, 251, 256).
**characterized in that** the first roller (260) is rotationally coupled with the second roller (264) by a transmission (272) on the extendable bar assembly (212), and a rotation of the second roller (264) is driven by a motion generator (290, 690, F 2) configured to deploy the lower canopy.

2. The awning assembly of Claim 1, wherein a rotation of the first roller (260) furls a slack length (248) of the upper canopy (232) about the first roller (260) and a corresponding rotation of the second roller (264) unfurls a corresponding length of the lower canopy (236) from the second roller (264).

3. The awning assembly of Claim 1, wherein a rotation of the first roller (260) unfurls a slack length (248) of the upper canopy (232) from the first roller (260) and a corresponding rotation of the second roller (264) furls a corresponding length of the lower canopy (236) about the second roller (264).

4. The awning assembly of any of Claims 1-3, wherein the second end (244) of the upper canopy (232) applies a first tensioning force on the first roller (260) resulting in a first moment on the first roller (260) as the extendable bar assembly (212) is extended between the stowed position and the extended position and applies a second tensioning force on the first roller (260) resulting in a second moment on the first roller (260) in the extended position, the first moment preventing rotation of the first roller (260) and the second moment allowing rotation of the first roller (260).

5. The awning assembly of any of Claims 1-4, wherein the motion generator (290, 690, F 2) includes the transmission (272) coupled with a biasing element that stores energy as the second roller (264) is rotated to retract the lower canopy (236), the stored energy of the biasing element biases the second roller (264) to extend the lower canopy (236) from the extendable bar assembly (212).

6. The awning assembly of any of Claims 1-5, wherein the base roller (220) is disposed adjacent to the ground surface and is designed to wind the upper canopy (232) until the lower canopy (236) is fully wound about the second roller (264), the awning assembly (200) designed such that further winding of the upper canopy (232) about the base roller (220) moves a moveable housing toward the ground surface.

7. The awning assembly of any of Claims 2-6, wherein the upper (232) and lower (236) canopies are deployable by extending the extendable arm (250, 251, 256), extension of the extendable arm (250, 251, 256) moving the extendable bar assembly (212) away from the mount portion (208), unwinding the upper canopy (232) from the base roller (220), allowing the slack length (248) of the upper canopy (232) to wind on the first roller (260), allowing rotation of the first roller (260) and rotation of the second (264) roller through the transmission (272), and unwinding of the lower canopy (236) from the second roller (264) to extend the lower canopy (236) from the movable housing.

8. The awning assembly of any of Claims 2-7, wherein the awning assembly is retracted when a terminal end (249) of the upper canopy (232) is furled about the base roller (220), causing a slack length (248) of the upper canopy (232) to be unfurled from the first roller (260), rotation of the first roller (260) causing rotation of the second roller (264) resulting in furling of the lower canopy (236).

9. A method of extending an awning assembly (200), comprising:
extending a support arm (250, 251, 256) away from a ground surface to move a housing away from the ground surface, to extend an upper canopy (232) away from the ground surface;
further extending a length of the upper canopy (232) away from the ground surface after the support arm (250, 251, 256) is fully extended;
engaging a transmission (272) disposed in the housing to move a first roller (260) disposed in the housing to wind up a slack length (248) of the upper canopy (232) to tension the upper canopy (232) upon movement of a second roller (264) disposed in the housing to unfurl a length of a lower canopy (236) from within the housing, the movement of the second roller (264) supported by a motion generator releasing stored potential energy (290, 690, F2).

10. The method of Claim 9, wherein a ratio of the slack length (248) to the length of the lower canopy (236) being unfurled is defined substantially by a transmission (272) coupling the first (260) and second (264) rollers.

11. The method of Claim 10, wherein the ratio is in the range of 1:1 to 1:10.

12. The method of Claim 11, wherein extending the support arm (250, 251, 256) further comprises unwinding a base roller (220) to extend the upper canopy (232) and further extending the length comprises further unwinding the base roller (220).

13. A method of retracting an awning assembly (200), comprising:
retracting an upper canopy (232) to unwind a slack length (248) of an upper canopy (232) from a first roller (260) disposed in a moveable housing of the awning assembly (200);
at least partially simultaneously with retracting the slack length (248) of the upper canopy (232), winding a vertical length of the lower canopy (236) about a second roller (264) disposed in the moveable housing of the awning assembly (200), wherein the rotation of the first roller (260) allows the rotation of the second roller (264) via a transmission (272); and
storing potential energy in a resilient member disposed on or in the moveable housing of the awning assembly (200) while winding the lower canopy (236).

14. The method of Claim 13, wherein a ratio of the slack length (248) to the vertical length is substantially defined by a ratio of rotation of a transmission (272).

15. The awning assembly of any of Claims 1-4 and 6-8, wherein the motion generator (290, 690, F 2) includes stored potential energy in an elevated lower bar (240) coupled with the second end (252) of the lower canopy (236).

16. The awning assembly of any of Claims 1-4 and 6-8, wherein the motion generator includes a motor coupled with the second roller.

## Patentansprüche

1. Markisenanordnung (200), umfassend:
eine Markisenrahmenanordnung (204), umfassend einen Befestigungsabschnitt (208), eine ausfahrbare Stangenanordnung (212) und mindestens einen ausfahrbaren Arm (250, 251, 256) mit einem ersten Ende (252, 254), das mit dem Befestigungsabschnitt gekoppelt ist (208) und ein zweites Ende (253, 255), das mit der ausfahrbaren Stangenanordnung (212) gekoppelt ist;
eine obere Überdachung (232) mit einem ersten Ende, das mit einer Basisrolle (220) des Befestigungsabschnitts (208) gekoppelt ist, und einem zweiten Ende (244), das mit einer ersten Rolle (260) der ausfahrbaren Stangenanordnung (212) gekoppelt ist, wobei die obere Überdachung (232) um die Basisrolle (220) zurückziehbar ist;
eine untere Überdachung (236) mit einem ersten Ende, das mit einer zweiten Rolle (264) der ausfahrbaren Stangenanordnung (212) gekoppelt ist, und einem zweiten Ende (252), das von der ausziehbaren Stangenanordnung (212) ausfahrbar ist, wobei die untere Überdachung (236) um die zweite Rolle (264) einziehbar und von der ausfahrbaren Stangenanordnung (212) ausfahrbar ist;
wobei die Markisenrahmenanordnung (204) eine verstaute Position, in der die ausfahrbare Stangenanordnung (212) neben dem Befestigungsabschnitt (208) ist, und eine ausgefahrene Position aufweist, in der die ausziehbare Stangenanordnung (212) durch den ausfahrbaren Arm (250, 251, 256) ausgefahren ist.
**dadurch gekennzeichnet, dass** die erste Rolle (260) mit der zweiten Rolle (264) durch ein Getriebe (272) an der ausfahrbaren Stangenanordnung (212) drehgekoppelt ist und eine Drehung der zweiten Rolle (264) durch einen Bewegungsgenerator (290, 690, F 2) angetrieben wird, der konfiguriert ist, um die untere Überdachung auszufahren.

2. Markisenanordnung nach Anspruch 1, wobei eine Drehung der ersten Rolle (260) eine schlaffe Länge (248) der oberen Überdachung (232) um die erste Rolle (260) aufrollt und eine entsprechende Drehung der zweiten Rolle (264) eine entsprechende Länge der unteren Überdachung (236) von der zweiten Rolle (264) abrollt.

3. Markisenanordnung nach Anspruch 1, wobei eine Drehung der ersten Rolle (260) eine schlaffe Länge (248) des oberen Vordachs (232) von der ersten Rolle (260) abrollt und eine entsprechende Drehung der zweiten Rolle (264) eine entsprechende Länge der unteren Überdachung (236) um die zweite Rolle (264) aufrollt.

4. Markisenanordnung nach einem der Ansprüche 1-3, wobei das zweite Ende (244) der oberen Überdachung (232) eine erste Spannkraft auf die erste Rolle (260) ausübt, was zu einem ersten Moment auf der ersten Rolle (260) führt, wenn die ausfahrbare Stangenanordnung (212) zwischen der verstauten Position und der ausgefahrenen Position ausgefahren wird, und eine zweite Spannkraft auf die erste Rolle (260) aufbringt, was zu einem zweiten Moment auf der ersten Rolle (260) in der ausgefahrenen Position führt, wobei das erste Moment eine Drehung der ersten Rolle (260) verhindert und das zweite Moment eine Drehung der ersten Rolle (260) ermöglicht.

5. Markisenanordnung nach einem der Ansprüche 1-4, wobei der Bewegungsgenerator (290, 690, F 2) das Getriebe (272) umfasst, das mit einem Vorspannelement gekoppelt ist, das Energie speichert, wenn die zweite Rolle (264) gedreht wird, um die untere Überdachung (236) zurückzuziehen, wobei die gespeicherte Energie des Vorspannelements die zweite Rolle (264) vorspannt, um die untere Überdachung (236) von der ausfahrbaren Stangenanordnung (212) auszufahren.

6. Markisenanordnung nach einem der Ansprüche 1-5, wobei die Basisrolle (220) angrenzend an die Bodenfläche angeordnet und dazu ausgelegt ist, die obere Überdachung (232) aufzuwickeln, bis die untere Überdachung (236) vollständig um die zweite Rolle gewickelt ist (264), wobei die Markisenanordnung (200) so konstruiert ist, dass ein weiteres Wickeln der oberen Überdachung (232) um die Basisrolle (220) ein bewegliches Gehäuse in Richtung der Bodenoberfläche bewegt.

7. Markisenanordnung nach einem der Ansprüche 2-6, wobei die obere (232) und die untere (236) Überdachung ausfahrbar sind, indem der ausfahrbare Arm (250, 251, 256) ausgefahren wird, ein Ausfahren des ausfahrbaren Arms (250, 251, 256) die ausfahrbare Stangenanordnung (212) von dem Befestigungsabschnitt (208) weg bewegt, die obere Überdachung (232) von der Basisrolle (220) abwickelt, es ermöglicht, dass die lose Länge (248) der oberen Überdachung (232) auf die erste Rolle (260) aufgewickelt wird, die Drehung der ersten Rolle (260) und die Drehung der zweiten Rolle (264) durch das Getriebe (272) ermöglicht, und ein Abwickeln der unteren Überdachung (236) von der zweiten Rolle (264), um die untere Haube (236) aus dem beweglichen Gehäuse herauszuziehen.

8. Markisenanordnung nach einem der Ansprüche 2-7, wobei die Markisenanordnung eingezogen wird, wenn ein Endstück (249) der oberen Überdachung (232) um die Basisrolle (220) aufgerollt wird, was bewirkt, dass eine schlaffe Länge (248) der oberen Überdachung (232) von der ersten Rolle (260) abgerollt wird, wobei die Drehung der ersten Rolle (260) eine Drehung der zweiten Rolle (264) bewirkt, was zum Aufrollen der unteren Überdachung (236) führt.

9. Verfahren zum Ausfahren einer Markisenanordnung (200), umfassend:
Ausfahren eines Stützarms (250, 251, 256) von einer Bodenfläche weg, um ein Gehäuse von der Bodenfläche weg zu bewegen, um eine obere Überdachung (232) von der Bodenfläche weg auszufahren;
weiteres Ausfahren einer Länge der oberen Überdachung (232) weg von der Bodenoberfläche, nachdem der Stützarm (250, 251, 256) vollständig ausgefahren ist;
Eingreifen in ein in dem Gehäuse angeordnetes Getriebe (272), um eine in dem Gehäuse angeordnete erste Rolle (260) zu bewegen, um eine schlaffe Länge (248) der oberen Überdachung (232) aufzuwickeln, um die obere Überdachung (232) bei Bewegung einer zweiten Rolle (264) zu spannen, die in dem Gehäuse angeordnet ist, um eine Länge einer unteren Überdachung (236) aus dem Gehäuse heraus zu entfalten, wobei die Bewegung der zweiten Rolle (264) durch einen Bewegungsgenerator unterstützt wird, der gespeicherte potentielle Energie (290, 690, F 2) freisetzt.

10. Verfahren nach Anspruch 9, wobei ein Verhältnis der durchhängenden Länge (248) zur Länge der ausgerollten unteren Haube (236) im Wesentlichen durch ein Getriebe (272) definiert wird, das die erste (260) und zweite (264) Rolle koppelt.

11. Verfahren nach Anspruch 10, wobei das Verhältnis im Bereich von 1:1 bis 1:10 liegt.

12. Verfahren nach Anspruch 11, wobei das Ausfahren des Stützarms (250, 251, 256) ferner das Abwickeln einer Basisrolle (220) umfasst, um die obere Überdachung (232) zu verlängern, und das weitere Ausfahren der Länge das weitere Abwickeln der Basisrolle (220) umfasst.

13. Verfahren zum Einfahren einer Markisenanordnung (200), umfassend:
Zurückziehen einer oberen Überdachung (232), um eine lose Länge (248) einer oberen Überdachung (232) von einer ersten Rolle (260) abzuwickeln, die in einem beweglichen Gehäuse der Markisenanordnung (200) angeordnet ist;
zumindest teilweise gleichzeitig mit dem Zurückziehen der schlaffen Länge (248) der oberen Überdachung (232), Wickeln einer vertikalen Länge der unteren Überdachung (236) um eine zweite Rolle (264), die in dem beweglichen Gehäuse der Markisenanordnung (200) angeordnet ist, wobei die Drehung der ersten Rolle (260) die Drehung der zweiten Rolle (264) über ein Getriebe (272) ermöglicht; und
Speichern potenzieller Energie in einem elastischen Element, das an oder in dem beweglichen Gehäuse der Markisenanordnung (200) angeordnet ist, während die untere Überdachung (236) aufgerollt wird.

14. Verfahren nach Anspruch 13, wobei ein Verhältnis der schlaffen Länge (248) zu der vertikalen Länge im Wesentlichen durch ein Rotationsverhältnis eines Getriebes (272) definiert ist.

15. Markisenanordnung nach einem der Ansprüche 1-4 und 6-8, wobei der Bewegungsgenerator (290, 690, F 2) gespeicherte potentielle Energie in einer erhöhten unteren Stange (240) enthält, die mit dem zweiten Ende (252) der unteren Überdachung (236) gekoppelt ist.

16. Markisenanordnung nach einem der Ansprüche 1-4 und 6-8, wobei der Bewegungsgenerator einen mit der zweiten Rolle gekoppelten Motor umfasst.

## Revendications

1. Ensemble de store (200), comprenant :
un ensemble de cadre de store (204) comprenant une partie de montage (208), un ensemble de barre extensible (212), et au moins un bras extensible (250, 251, 256) ayant une première extrémité (252, 254) couplée à la partie de montage (208) et une seconde extrémité (253, 255) couplée à l'ensemble de barre extensible (212);
un toit supérieur (232) ayant une première extrémité couplée à un rouleau de base (220) de la partie de montage (208) et une seconde extrémité (244) couplée à un premier rouleau (260) de l'ensemble de barre extensible (212), le toit supérieur (232) étant rétractable autour du rouleau de base (220) ;
un auvent inférieur (236) ayant une première extrémité couplée à un deuxième rouleau (264) de l'ensemble de barre extensible (212) et une deuxième extrémité (252) extensible depuis l'ensemble de barre extensible (212), l'auvent inférieur (236) étant rétractable autour du deuxième rouleau (264) et extensible depuis l'ensemble de barre extensible (212);
l'ensemble de cadre de store (204) ayant une position rangée dans laquelle l'ensemble de barre extensible (212) est adjacent à la partie de montage (208) et une position étendue dans laquelle l'ensemble de barre extensible (212) est étendu par le bras extensible (250, 251, 256).
**caractérisé en ce que** le premier rouleau (260) est couplé en rotation avec le second rouleau (264) par une transmission (272) sur l'ensemble de barre extensible (212), et une rotation du second rouleau (264) est entraînée par un générateur de mouvement (290, 690, F 2) configuré pour déployer l'auvent inférieur.

2. Ensemble de store selon la revendication 1, dans lequel une rotation du premier rouleau (260) enroule une longueur relâchée (248) de l'auvent supérieur (232) autour du premier rouleau (260) et une rotation correspondante du second rouleau (264) déroule une longueur correspondante de l'auvent inférieur (236) à partir du second rouleau (264).

3. Ensemble de store selon la revendication 1, dans lequel une rotation du premier rouleau (260) déploie une longueur de mou (248) de l'auvent supérieur (232) à partir du premier rouleau (260) et une rotation correspondante du second rouleau (264) enroule une longueur correspondante de l'auvent inférieur (236) autour du second rouleau (264).

4. Ensemble de store de l'une quelconque des revendications 1-3, dans lequel la seconde extrémité (244) de l'auvent supérieur (232) applique une première force de tension sur le premier rouleau (260) résultant en un premier moment sur le premier rouleau (260) lorsque l'ensemble de barre extensible (212) est étendu entre la position rangée et la position étendue et applique une seconde force de tension sur le premier rouleau (260) résultant en un second moment sur le premier rouleau (260) dans la position étendue, le premier moment empêchant la rotation du premier rouleau (260) et le second moment permettant la rotation du premier rouleau (260).

5. Ensemble de store de l'une quelconque des revendications 1-4, dans lequel le générateur de mouvement (290, 690, F2) comprend la transmission (272) couplée à un élément de sollicitation qui stocke de l'énergie lorsque le second rouleau (264) est tourné pour rétracter l'auvent inférieur (236), l'énergie stockée de l'élément de sollicitation sollicite le second rouleau (264) pour étendre l'auvent inférieur (236) à partir de l'ensemble de barre extensible (212).

6. Ensemble de store de l'une quelconque des revendications 1-5, dans lequel le rouleau de base (220) est disposé de manière adjacente à la surface du sol et est conçu pour enrouler l'auvent supérieur (232) jusqu'à ce que l'auvent inférieur (236) soit complètement enroulé autour du second rouleau (264), l'ensemble de store (200) étant conçu de telle sorte qu'un enroulement supplémentaire de l'auvent supérieur (232) autour du rouleau de base (220) déplace un boîtier mobile vers la surface du sol.

7. Ensemble de store de l'une quelconque des revendications 2-6, dans lequel les auvents supérieur (232) et inférieur (236) sont déployables en étendant le bras extensible (250, 251, 256), l'extension du bras extensible (250, 251, 256) déplaçant l'ensemble de barre extensible (212) à l'écart de la partie de montage (208), déroulant l'auvent supérieur (232) du rouleau de base (220), permettant à la longueur de mou (248) de la voûte supérieure (232) de s'enrouler sur le premier rouleau (260), permettant la rotation du premier rouleau (260) et la rotation du second rouleau (264) par l'intermédiaire de la transmission (272), et le déroulement de la voûte inférieure (236) du second rouleau (264) pour étendre la voûte inférieure (236) du logement mobile.

8. Ensemble de store de l'une quelconque des revendications 2-7, dans lequel l'ensemble de store est rétracté lorsqu'une extrémité terminale (249) de l'auvent supérieur (232) est enroulée autour du rouleau de base (220), provoquant le déroulement d'une longueur de mou (248) de l'auvent supérieur (232) à partir du premier rouleau (260), la rotation du premier rouleau (260) provoquant la rotation du second rouleau (264) entraînant l'enroulement de l'auvent inférieur (236).

9. Procédé d'extension d'un ensemble d'auvent (200), comprenant :
l'extension d'un bras de support (250, 251, 256) à l'écart d'une surface du sol pour éloigner un boîtier de la surface du sol, pour étendre un auvent supérieur (232) à l'écart de la surface du sol;
étendre encore une longueur de l'auvent supérieur (232) loin de la surface du sol après que le bras de support (250, 251, 256) soit complètement étendu ;
l'engagement d'une transmission (272) disposée dans le logement pour déplacer un premier rouleau (260) disposé dans le logement pour enrouler une longueur de mou (248) de l'auvent supérieur (232) pour tendre l'auvent supérieur (232) lors du mouvement d'un second rouleau (264) disposé dans le logement pour dérouler une longueur d'un auvent inférieur (236) à partir de l'intérieur du logement, le mouvement du second rouleau (264) étant supporté par un générateur de mouvement libérant l'énergie potentielle stockée (290, 690, F 2).

10. Procédé selon la revendication 9, dans lequel un rapport entre la longueur de mou (248) et la longueur de la voilure inférieure (236) en cours de déploiement est défini sensiblement par une transmission (272) couplant les premier (260) et second (264) rouleaux.

11. Procédé selon la revendication 10, dans lequel le rapport est dans la gamme de 1:1 à 1:10.

12. Procédé de la revendication 11, dans lequel l'extension du bras de support (250, 251, 256) comprend en outre le déroulement d'un rouleau de base (220) pour étendre la voûte supérieure (232) et l'extension supplémentaire de la longueur comprend le déroulement supplémentaire du rouleau de base (220).

13. Procédé de rétraction d'un ensemble de store (200), comprenant:
la rétraction d'un auvent supérieur (232) pour dérouler une longueur de mou (248) d'un auvent supérieur (232) d'un premier rouleau (260) disposé dans un logement mobile de l'ensemble de store (200) ;
au moins partiellement simultanément à la rétraction de la longueur de mou (248) de l'auvent supérieur (232), enrouler une longueur verticale de l'auvent inférieur (236) autour d'un second rouleau (264) disposé dans le boîtier mobile de l'ensemble de store (200), dans lequel la rotation du premier rouleau (260) permet la rotation du second rouleau (264) via une transmission (272) ; et
stocker de l'énergie potentielle dans un élément élastique disposé sur ou dans le boîtier mobile de l'ensemble de store (200) pendant l'enroulement de l'auvent inférieur (236).

14. Procédé de la revendication 13, dans lequel un rapport de la longueur de mou (248) sur la longueur verticale est sensiblement défini par un rapport de la rotation d'une transmission (272).

15. Ensemble de store de l'une quelconque des revendications 1-4 et 6-8, dans lequel le générateur de mouvement (290, 690, F2) comprend une énergie potentielle stockée dans une barre inférieure élevée (240) couplée à la seconde extrémité (252) de l'auvent inférieur (236)

16. Ensemble de store de l'une quelconque des revendications 1-4 et 6-8, dans lequel le générateur de mouvement comprend un moteur couplé au second rouleau.
